# FASCICULE DE BREVET EUROPEEN

(11) **EP 1 284 902 B1**
(45) Date de publication et mention de la délivrance du brevet: **21.11.2007**
(21) Numéro de dépôt: 01947498.0
(22) Date de dépôt: 22.05.2001
(51) Int. Cl.: B62K 19/34, B62K 25/28

(54) **DETECTEUR D'EFFORT DE PEDALAGE OU DE TENSION DE CHAINE ET DISPOSITIFS UTILISANT LEDIT DETECTEUR**
PEDALKRAFT- ODER KETTENSPANNUNGSDETEKTOR UND VORRICHTUNGEN MIT EINEM SOLCHEN DETEKTOR
SENSOR FOR PEDALLING FORCE OR CHAIN TENSION AND DEVICES USING SAME

(30) Priorité: 22.05.2000 FR 0006527
(43) Date de publication de la demande: 26.02.2003
(73) Titulaire: Crasset, Dominique, 45260 La Cour Marigny (FR)
(72) Inventeur: Crasset, Dominique, 45260 La Cour Marigny (FR)
(74) Mandataire: Debay, Yves
(86) Numéro de dépôt international: PCT/FR2001/001581
(87) Numéro de publication internationale: WO 2001/089917

(56) Documents cités:
- EP-A- 0 913 322
- DE-A- 4 137 308
- US-A- 5 354 085

## Description

La présente invention se rapporte à un détecteur d'effort de pédalage ou de tension de chaîne, ledit détecteur pouvant être combiné ou intégré à différents dispositifs d'une bicyclette tels qu'un dispositif de mesure de l'énergie fourni par le cycliste, un dérailleur, une suspension ou une selle de manière à modifier automatiquement leurs états en fonction de l'effort de pédalage ou de la tension de chaîne.

Contrairement au domaine de l'automobile, où il existe de nombreux dispositifs d'assistance à la conduite, par exemple les embrayages automatiques, qui rendent le véhicule équipé plus sûr, plus confortable et plus facile à conduire, il n'existe dans le domaine du cycle aucun moyen efficace pour gérer automatiquement la raideur des suspensions, les changements de vitesses, la hauteur de l'assise et/ou pour informer le cycliste sur l'effort fourni.

Aussi, la présente invention vise à proposer un détecteur d'effort de pédalage ou de tension de chaîne qui, combiné à différents dispositifs d'une bicyclette tels qu'un dérailleur, une suspension ou une selle, permet de modifier automatiquement leurs états, notamment sans que le cycliste n'ait besoin de lâcher les mains du guidon.

A cet effet, l'invention a pour objet un détecteur d'effort de pédalage et/ou de tension de chaîne prévu pour être rapporté sur un cadre de vélo comportant un axe de pédalier caractérisé en ce qu'il comprend un élément intermédiaire, par rapport auquel peut pivoter l'axe du pédalier, susceptible de pivoter par rapport au cadre autour d'un axe désaxé par rapport à l'axe du pédalier ainsi que des moyens de maintien déformable susceptibles de s'opposer au pivotement dudit élément, le pivotement dudit élément à l'encontre des moyens de maintien engendré par l'effort de pédalage et/ou la tension de chaîne étant susceptible d'informer des moyens de commande.

Selon un premier mode de réalisation, il comprend une platine montée pivotante autour d'un axe solidaire de la partie inférieure du cadre, l'axe de pédalier étant monté pivotant dans un palier solidaire de la platine.

Selon un second mode de réalisation, il comprend un palier dans lequel l'axe du pédalier est monté pivotant, ledit palier étant susceptible de pivoter dans un alésage, d'axe désaxé par rapport à l'axe du pédalier, disposé à l'extrémité inférieure du cadre.

Selon une autre caractéristique, les moyens de maintien sont constitués d'un élément déformable qui relie l'élément intermédiaire au cadre.

Selon une autre caractéristique, les moyens de maintien comprennent un serti solidaire d'un câble reliant le détecteur aux moyens de commande qui prend appui sur un élément élastique déformable reposant sur une butée solidaire du cadre.

Avantageusement, il comprend des moyens d'amortissement susceptibles de générer un phénomène d'hystérésis au niveau de l'action du câble sur les moyens de commande.

Certaines bicyclettes, plus particulièrement celles destinées au tout terrain, peuvent être équipées d'une ou plusieurs suspensions visant à améliorer le confort et la sécurité du cycliste.

Ces suspensions peuvent être disposées à l'avant de la bicyclette, de préférence au niveau des branches de la fourche avant, et/ou à l'arrière, la fourche arrière étant articulée par rapport au cadre à une première extrémité, la suspension étant disposée entre la seconde extrémité et le cadre.

Ces suspensions peuvent être de type mécanique, pneumatique ou hydraulique.

En fonction des réglages du constructeur, une suspension est plus ou moins ferme. Ainsi une suspension souple est susceptible d'absorber mieux les chocs et d'être plus confortable.

Toutefois, les suspensions trop souples ont tendance à absorber une partie de l'énergie du cycliste. Ainsi, lorsque le cycliste appuie sur les pédales, une partie de cet effort provoque un effet de pompage au niveau de la suspension si bien que l'intégralité de l'effort du cycliste n'est pas transmis à la transmission par chaîne ce qui réduit le rendement global du système cycliste/bicyclette.

Aussi, plus la suspension est souple et confortable, plus les pertes engendrées par l'effet de pompage au moment du pédalage sont importantes.

Au contraire, si on cherche à réduire ces pertes, il convient de raidir la suspension ce qui nécessairement induit un confort moindre.

On s'aperçoit ainsi que le confort et le rendement sont des notions à priori incompatibles, l'amélioration de l'une entraînant la dégradation de l'autre.

Aussi, la présente invention vise à pallier les inconvénients des suspensions de l'art antérieur en proposant une suspension autorégulatrice pour bicyclette utilisant le détecteur de l'invention, qui permet d'ajuster automatiquement sa raideur, afin d'obtenir une suspension souple dans les phases de roue libre et plus raide lors des phases de pédalage, ce qui contribue d'une part, à améliorer le confort de la bicyclette, et d'autre part, à réduire les pertes engendrées par l'effet de pompage au moment du pédalage.

Le document DE-A-4137308 illustre un tel système de suspension autorégulatrice pour bicyclette. Le préambule de la revendication 1 reprend les termes divulgués dans ce document.

A cet effet, l'invention a pour objet une suspension autorégulatrice utilisant le détecteur selon l'invention, ladite suspension étant de type hydraulique et comprenant un ajutage réglable pour ajuster la raideur de ladite suspension, caractérisée en ce que l'ajutage est réglé par les moyens de commande reliés par l'intermédiaire d'un câble au détecteur.

L'invention propose en variante, une suspension autorégulatrice utilisant un détecteur selon l'invention, comprenant un corps dans lequel peut coulisser un piston, un ressort étant interposé entre ces deux éléments, caractérisée en ce qu'elle comprend un anneau entourant le piston, relié au corps par une patte, ledit anneau actionné par le câble du détecteur étant susceptible de coincer ledit piston par arc-boutement et/ou pincement respectivement par déformation de la patte et/ou par déformation radiale dudit anneau.

L'invention propose également un dispositif de réglage de la hauteur d'une selle de bicyclette, ladite selle étant fixée à l'extrémité d'un tube de selle monté coulissant par rapport au cadre, utilisant un détecteur selon l'invention, caractérisé en ce qu'il comprend un ressort tendant à augmenter la hauteur de selle et des moyens d'arrêt en translation du tube de selle commandés par le détecteur.

L'invention propose également un dispositif de changement de vitesses automatique utilisant un détecteur selon l'invention, prévu pour une bicyclette équipé d'au moins un dérailleur électrique caractérisé en ce qu'il comprend un calculateur informé par le détecteur, ledit calculateur provoquant le changement de vitesses dès que l'effort de pédalage dépasse un seuil bas ou un seuil haut prédéterminés afin d'obtenir un effort de pédalage sensiblement constant.

D'autres caractéristiques et avantages ressortiront de la description qui va suivre du dispositif selon l'invention, description donnée à titre d'exemple uniquement et en regard des dessins annexés sur lesquels :
- la figure 1 est une vue en élévation latérale d'une bicyclette équipée de d'une suspension autorégulatrice selon l'invention,
- la figure 2 est une vue du détecteur de l'invention selon un premier mode de réalisation en phase de roue libre,
- la figure 3 est une vue du détecteur de la figure 2 en phase de pédalage,
- la figure 4 est une vue du détecteur de l'invention selon un second mode de réalisation en phase de pédalage,
- la figure 5 est une vue en coupe du détecteur de la figure 4,
- les figures 6A et 6B sont des vues en coupe d'un élément déformable selon l'invention respectivement en position repos et étirée,
- la figure 7A est une vue en coupe d'une suspension à gaz,
- la figure 7B est une vue de détail illustrant le boisseau de la suspension à gaz de la figure 7A,
- les figures 8A et 8B sont des vues en coupe d'une suspension à ressort avec un blocage par arc-boutement,
- la figure 8C est une vue en coupe transversale d'une suspension à ressort avec un blocage par pincement,
- la figure 9A est une vue en coupe illustrant un dispositif de blocage de suspension avant selon un premier état,
- la figure 9B est une vue en coupe illustrant le dispositif de la figure 9A selon un second état, et
- la figure 10 est une vue schématique illustrant un dispositif de mesure de l'effort de pédalage.

La description du détecteur d'effort de pédalage ou de tension de chaîne selon l'invention va être faite dans le cadre d'une application à une suspension autorégulatrice. Bien entendu, comme cela sera décrit par la suite, ce détecteur peut être combiné à d'autres éléments de la bicyclette afin d'obtenir un changement d'état ou un réglage automatique desdits dispositifs en fonction de l'effort de pédalage ou de la tension de chaîne.

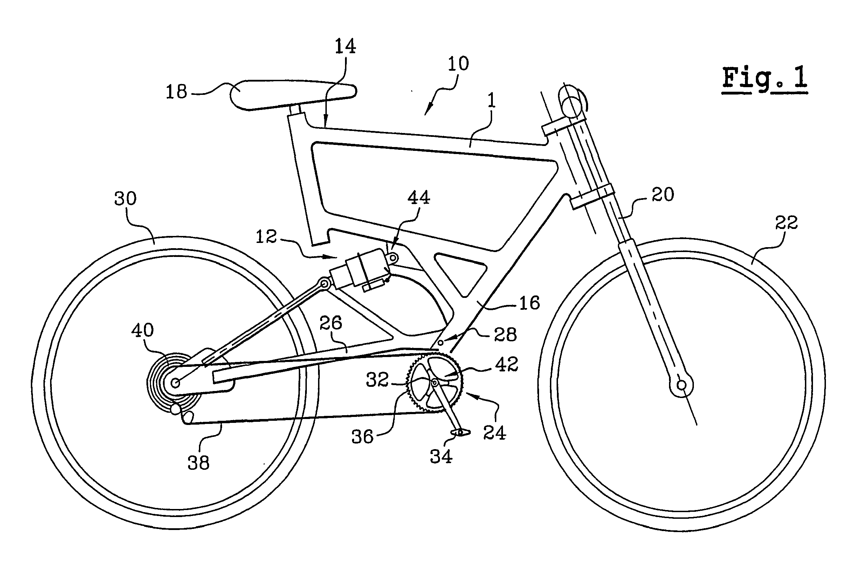

Sur la figure 1, on a représenté une bicyclette 10 équipée d'une suspension 12 autorégulatrice selon l'invention.

La bicyclette comprend un cadre 14 en deux parties, une première partie 16 à l'avant où sont rapportés la selle 18, la fourche avant 20, la roue avant 22 et le pédalier 24 et une seconde partie 26 formant un triangle, une première extrémité étant reliée à la première partie 16, au niveau du pédalier 24 grâce à des moyens 28 d'articulation, la deuxième extrémité supportant une roue arrière 30, la troisième extrémité étant reliée à la première partie 16, sous la selle, par l'intermédiaire de la suspension 12.

De façon connue, le pédalier 24 comprend un axe 32 sur lequel sont rapportés les pédales 34 et au moins un plateau 36 susceptible d'entraîner par l'intermédiaire d'une chaîne 38 au moins un pignon 40 solidaire de la roue arrière 30.

Selon l'invention, le dispositif de suspension comprend un détecteur 42 de l'effort de pédalage et/ou de la tension de chaîne susceptible de renseigner des moyens 44 de réglage de la raideur de la suspension en fonction de l'effort exercé sur les pédales.

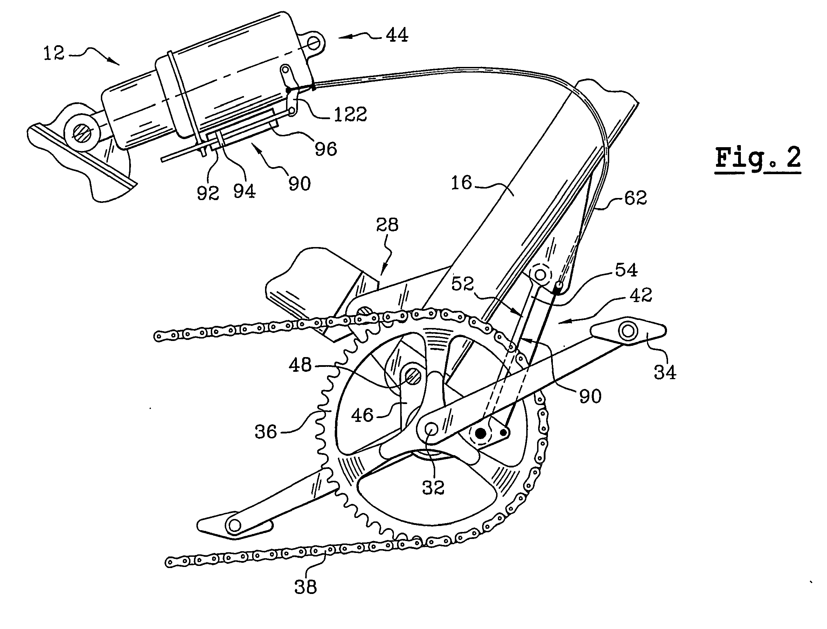

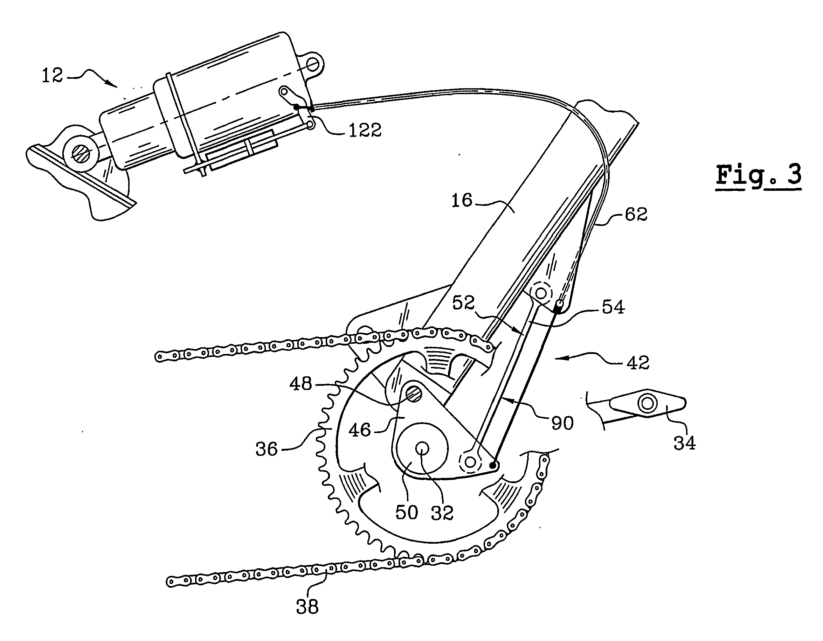

Selon un premier mode de réalisation illustré sur les figures 2 et 3, le détecteur 42 comprend une platine 46 montée pivotante autour d'un axe 48 solidaire de la partie inférieure de la première partie 16 du cadre.

L'axe 32 du pédalier est monté pivotant dans un palier 50 solidaire de la platine 46, l'axe 32 du pédalier étant désaxé par rapport à l'axe de pivotement 48.

Des moyens 52 de maintien déformable sont prévus afin de s'opposer au pivotement de la platine, l'effort de pédalage ou/et la tension de la chaîne tendant à faire pivoter la platine 46 en déformant les moyens 52 de maintien.

Selon un mode de réalisation, les moyens 52 de maintien sont constitués d'un élément déformable 54 qui relie la platine 46 à la première partie 16 du cadre.

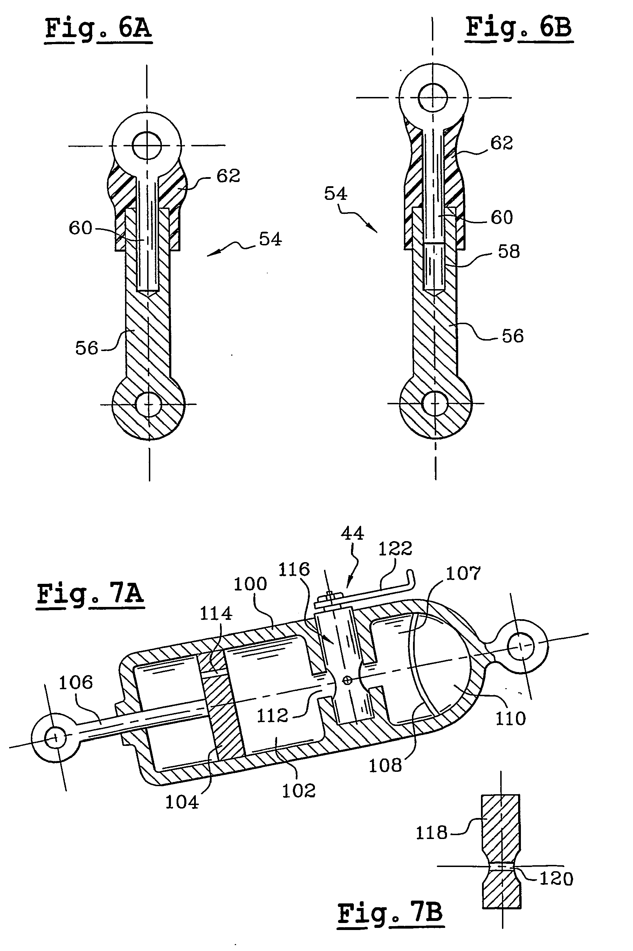

Selon un mode de réalisation illustré par les figures 6A et 6B, cet élément déformable 54 est constitué d'un corps 56 avec à une première extrémité un oeil susceptible d'être relié à la platine 46 ou à la première partie 16 du cadre et à une seconde extrémité un alésage débouchant 58 dans lequel peut coulisser à la manière d'un piston une tige 60 qui comporte à son extrémité libre un oeil susceptible d'être relié à la platine 46 ou à la première partie 16 du cadre. Une partie 62 en matériau déformable, en caoutchouc par exemple, est prévue afin de relier le corps 56 de la tige 60. Sur la figure 6A, l'élément élastique est représenté en butée positive correspondant à la phase de roue libre, alors que sur la figure 6B, il est représenté en position étirée correspondant à la phase de pédalage.

De préférence, la platine 46 est une plaque de forme triangulaire, l'axe 48, le palier 50 et le point d'ancrage de l'élément déformable 54 étant disposés à chaque sommet du triangle.

Ce détecteur 42 pilote les moyens 44 de commande grâce à un câble 62 fixé à la platine 46 à proximité du point d'ancrage de l'élément élastique 54.

Ainsi, lorsque le cycliste exerce un effort sur les pédales, cet effort a tendance à faire pivoter la platine 46 qui tire alors sur le câble 62 afin de piloter les moyens 44 de commande.

Lorsque, le cycliste n'appuie plus sur les pédales, l'axe du pédalier 32 n'exerce plus aucun effort sur la platine si bien qu'elle revient en position repos, sous l'action de l'élément déformable 54 qui reprend sa forme initiale. Le câble 62 est alors relâché.

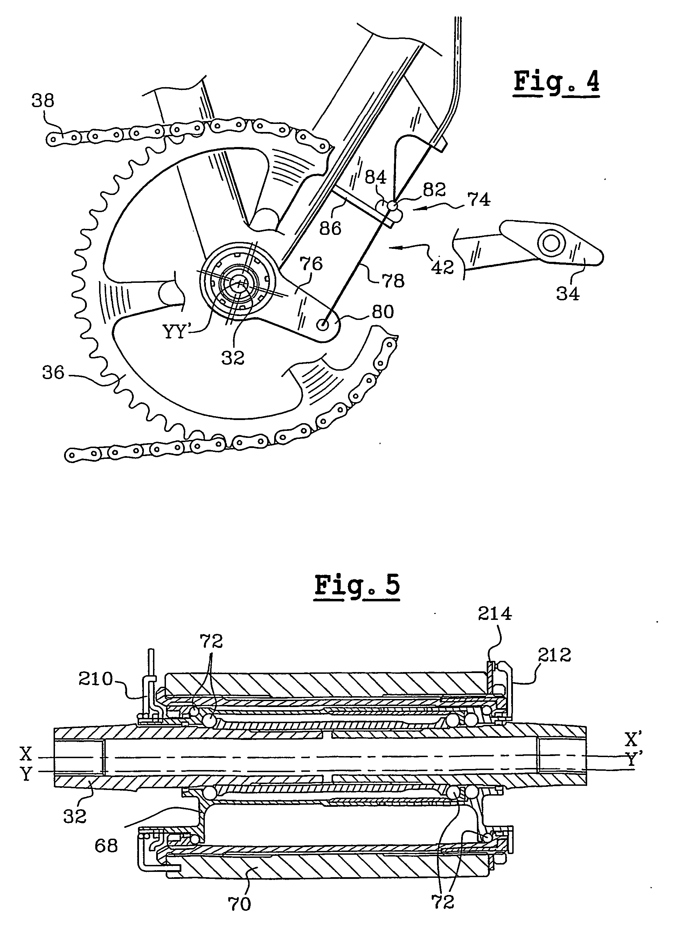

Selon une seconde variante du détecteur décrite sur les figures 4 et 5, l'axe du pédalier 32, repéré XX', est monté pivotant dans un palier 68 qui est lui même monté pivotant dans un alésage 70, d'axe YY', disposé à l'extrémité inférieure de la première partie 16 du cadre. Selon un mode de réalisation préféré, illustré par la figure 5, l'axe du pédalier 32 et le palier 68 sont montés pivotant grâce à des billes ou roulements 72.

L'alésage 70 peut être prévu directement au niveau du cadre ou bien ménagé dans un tube utilisé comme boîtier de dimensions appropriées pour être vissé dans le cadre en lieu et place du boîtier de pédalier existant, comme illustré par la figure 5.

Comme précédemment, des moyens 74 de maintien déformable sont prévus pour maintenir au repos le palier 68 de telle manière que l'effort de pédalage tend à faire pivoter ledit palier dans l'alésage 70, l'axe XX' étant désaxé par rapport à l'axe YY'.

Le palier 68 comprend à une de ses extrémités une plaque formant un levier 76 à l'extrémité libre duquel est fixé un câble 78 de commande relié aux moyens 44 de commande.

Selon une variante de réalisation, les moyens 74 de maintien comprennent un serti 82, sous forme de plomb, solidaire du câble 78 qui prend appui sur un élément 84 élastique déformable reposant sur une butée 86 solidaire de la première partie 16 du cadre. Ainsi, en pivotant, le levier 76 tire sur le câble si bien que le serti 82 comprime l'élément élastique 84 comme illustré par la figure 4.

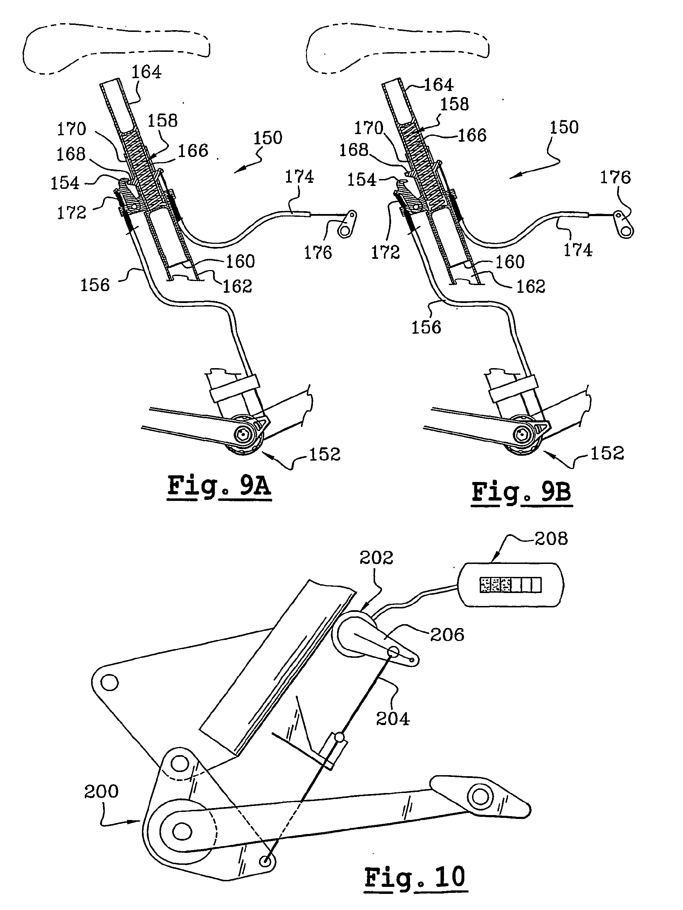

Ces moyens 74 de maintien déformable peuvent aussi bien s'appliquer à la première variante du détecteur comme illustré par la figure 10 et vice versa.

Selon cette variante, lorsque le cycliste exerce un effort sur les pédales, l'axe 32 du pédalier exerce un effort sur le palier 68 qui tend à faire pivoter ledit palier et le levier 76 qui tire alors sur le câble 78 et déforme l'élément élastique 84.

Lorsque le cycliste n'exerce plus d'effort sur les pédales, l'axe 32 du pédalier n'exerce plus d'effort sur le palier si bien que ce dernier reprend sa position initiale sous l'action de l'élément élastique 84 déformable. Le câble 78 est alors relâché.

Selon une amélioration susceptible de s'adapter aux deux variantes, l'effort du pédalage n'étant pas constant et passant deux fois par une valeur nulle à chaque tour de pédale, le détecteur de l'invention comprend des moyens 90 d'amortissement susceptibles de générer un phénomène d'hystérésis au niveau de l'action du câble sur les moyens 44 de commande.

Les éléments élastiques 54, 84 peuvent constituer dans certains cas les moyens 90 d'amortissement en fonction des caractéristiques du matériau utilisé, notamment lorsque les courbes de contrainte-déformation relatives au chargement et déchargement ne coïncident pas.

En variante, les moyens 90 d'amortissement comprennent un damper constitué d'un corps 92 dans lequel peut se translater un piston 94 lié par l'intermédiaire d'une tige 96 au câble de commande 62 ou 78, visible sur la figue 2.

Ainsi, en modulant l'écoulement d'un fluide d'une chambre à l'autre à travers le piston 94, on freine le relâchement du câble 62 ou 78, de la sorte le dispositif ne revient pas en position repos chaque fois que l'effort de pédalage ou la tension de chaîne passe par une valeur nulle.

Selon une autre caractéristique de l'invention, en fonction de la position relative de l'axe du pédalier 32 ou XX' et de l'axe 48 de pivotement de la platine 46 ou de l'axe YY' de pivotement du palier 68, le détecteur est plus ou moins sensible à l'effort de pédalage ou à la tension de la chaîne. Ainsi, si l'axe du pédalier est disposé à la verticale de l'axe 48 ou YY', le détecteur sera sensible à la tension de la chaîne et peu sensible à l'effort de pédalage. Au contraire, si l'axe du pédalier est disposé à l'horizontale de l'axe 48 ou YY', il sera sensible à l'effort de pédalage et peu sensible à la tension de la chaîne.

Dans le cas, d'une suspension, on choisira de préférence un détecteur 42 sensible à la tension de la chaîne.

Sur les figures 7A et 7B, on a représenté une suspension à gaz équipée de moyens 44 de commande susceptibles d'ajuster la raideur.

Cette suspension comprend un corps 100 comportant une première chambre 102 dans laquelle est susceptible de se translater un piston 104 prolongé par une tige 106 et une seconde chambre 107 dans laquelle est disposée une membrane 108 emprisonnant un gaz 110 sous pression, les deux chambres étant reliées par un conduit 112.

La chambre 102 et la partie restante de la chambre 107 sont remplies d'un fluide hydraulique, de préférence non compressible, et le piston 104 comprend un conduit 114 afin de transférer le fluide de part et d'autre dudit piston. Ainsi, la raideur de la suspension dépend de la viscosité du fluide et du débit au niveau des conduits 112 et 114.

Pour modifier la raideur de la suspension, les moyens de commande 44 comprennent une vanne 116 disposée au niveau du conduit 112 actionnée par le câble relié au détecteur 42 de la tension de chaîne.

Cette vanne 116 illustrée en détail par la figure 7B comprend un boisseau 118 de forme cylindrique, se logeant dans un alésage ménagé dans le corps 100 entre les deux chambres de manière à venir s'intercaler entre l'entrée et la sortie du conduit 112. Le boisseau 118 comporte un conduit 120 susceptible de faire communiquer l'entrée et la sortie du conduit 112 et peut prendre toute position comprise entre une première position extrême, dite bloquante, dans laquelle il s'oppose au passage du fluide d'une chambre à l'autre et une seconde position extrême, dite passante, dans laquelle il permet le passage du fluide, des moyens de rappel étant prévus pour le maintenir en position passante.

Pour faire pivoter le boisseau, ce dernier comprend un levier 122 qui s'étend radialement et dont l'extrémité libre peut être reliée directement au câble du détecteur 42, ou comme illustré par la figure 2, à la tige d'un damper 90, l'extrémité du câble du détecteur 42 se logeant dans une encoche ménagée entre l'axe de rotation du boisseau et le point d'ancrage du damper.

Le fonctionnement de cette suspension est relativement simple.

Lorsque le cycliste n'exerce aucun effort sur la pédale, la suspension fonctionne normalement, le boisseau étant en position passante. Le fluide peut s'écouler au travers du conduit 114 pour aller de part et d'autre du piston, la différence de volume engendrée par le déplacement de la tige du piston étant compensée grâce au gaz sous pression de la seconde chambre, le conduit 112 étant libre.

Lorsque le cycliste agit sur les pédales, à partir d'un certain seuil fonction de l'élément élastique 54 ou 84, le détecteur par l'intermédiaire du câble agit sur les moyens 44 de commande et fait pivoter le boisseau qui prend alors une position bloquante ou intermédiaire correspondant à un freinage de l'écoulement du fluide.

Dans ce cas, la différence de volume engendrée par les déplacements de la tige ne peut plus être compensée par le gaz sous pression si bien que le piston ne peut quasiment plus se translater, ce qui se traduit par une raideur nettement supérieure améliorant le rendement du pédalage.

De manière générale, les suspensions hydrauliques réglables comprennent un ajutage réglable manuellement. Selon l'invention, pour rendre ce réglage automatique, l'ajutage est réglé par des moyens de commande reliés au détecteur.

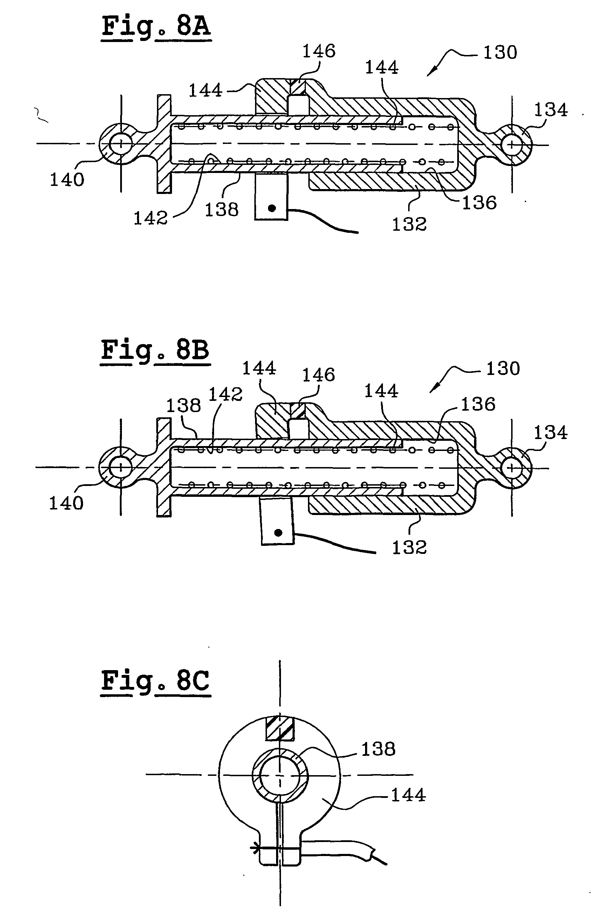

Sur les figures 8A, 8B et 8C, on a représenté une suspension à ressort 130.

Cette suspension comprend deux parties, d'une part, un corps 132 avec à une première extrémité un oeil 134 susceptible d'être relié à une partie du cadre et à une seconde extrémité un alésage 136 débouchant, et d'autre part, un piston 138 susceptible de coulisser dans l'alésage 136 comportant à son extrémité libre un oeil 140 susceptible d'être relié à l'autre partie du cadre et à son autre extrémité un alésage 142.

Un ressort 144 est également prévu entre le corps 132 et le piston 138, au niveau des alésages 136 et 142, tendant à écarter ces deux éléments. En complément, des moyens d'arrêt sont prévus pour empêcher la sortie complète du piston du corps.

Selon l'invention, un anneau 144 entourant le piston 138 est relié au corps 132 par une patte 146.

Selon un premier mode de réalisation illustré par les figures 8A et 8B, un jeu est prévu entre l'anneau 144 et le piston 138 et la patte 146 est en matériau déformable. Dans ce cas, le coincement du piston est obtenu par arc-boutement, la traction du câble du détecteur 42 déformant la patte 146 comme illustré par la figure 8B.

Selon un second mode de réalisation illustré par la figure 8C, l'anneau 144 est fendu et comprend une zone déformable de préférence opposée à la fente. Dans ce cas, le coincement du piston est obtenu par pincement, le câble ayant tendance à rapprocher les deux parties de l'anneau séparées par la fente.

Bien entendu, on peut prévoir un anneau qui combine les deux précédents modes de réalisation, le coincement du tube étant obtenu par arc-boutement et/ou pincement.

Comme illustré par les figures 9A et 9B, le détecteur d'effort de pédalage peut être inclus dans un dispositif 150 de blocage d'une suspension, notamment d'une suspension avant.

Les vélos tout terrain sont en général équipés d'une suspension avant disposée de préférence au niveau de la fourche. Comme dans le cas des suspensions arrière, ce type de suspension peut nuire à l'efficacité de pédalage par un effet de "pompage", notamment lorsque le cycliste pédale dans une position dite "en danseuse", c'est-à-dire debout sur les pédales sans être en appui sur la selle. Aussi, le dispositif 150 vise à bloquer la suspension avant du vélo lorsque le cycliste est "en danseuse" et comprend un détecteur d'effort 152 selon l'invention relié à un cliquet 154 par l'intermédiaire d'un câble 156 circulant dans une gaine maintenue entre deux arrêts de gaine solidaires du cadre.

Selon l'invention, le tube de selle 158 est réalisée en deux parties, une première partie inférieure 160 montée à la manière connue dans un tube 162 du cadre, et une seconde partie supérieure 164, reliée à la selle, susceptible de coulisser dans la première partie 160, un ressort de compression 166 étant interposé entre les deux parties 160 et 164. La raideur du ressort 166 est choisie de manière à permettre la compression dudit ressort sous le poids du cycliste.

La seconde partie 164 comprend une butée 168, traversant une lumière 170 ménagée dans la première partie 160, susceptible de coopérer avec le cliquet 154.

Ainsi, la seconde partie 164 est susceptible de coulisser dans la première partie 160 entre deux positions extrêmes, une première position dite basse correspondant à la position basse de la selle, figure 9A, dans laquelle la butée 168 est maintenue par le cliquet 154, le ressort 166 étant comprimé, et une seconde position dite haute correspondant à la position haute de la selle, figure 9B, dans laquelle le ressort 166 tend à écarter les première et seconde parties, le cliquet 154 ne retient plus la butée 168, cette dernière venant en contact avec le bord supérieur de la lumière 170.

De préférence, un ressort 172 de compression, pré-contraint, est disposé entre l'arrêt de gaine et le cliquet 154 de manière à maintenir ce dernier plaqué contre le tube de selle.

Selon ce dispositif, le mouvement de translation de la selle vers le haut permet de déclencher, par l'intermédiaire d'un câble 174, un actionneur 176 susceptible d'agir sur le réglage de la suspension avant.

Ainsi, lorsque le cycliste adopte un pédalage en danseuse, le détecteur d'effort de pédalage 152 produit un effort de traction sur le câble 156 qui est supérieur à l'effort du ressort de compression 172, ce qui provoque le pivotement du cliquet 154, libérant la butée 168. Le ressort de compression 166 repousse alors la partie supérieure 164 du tube de selle, la selle se translatant vers la position haute.

Le déplacement vers le haut provoque par l'intermédiaire du câble 174 la commande de l'actionneur 176 qui bloque alors la suspension avant.

Si le cycliste s'assied à nouveau sur la selle, la partie supérieure 164 se translate vers le bas, et provoque ainsi la commande de l'actionneur 176 qui ne bloque plus la suspension avant. Lorsque ladite partie 164 revient en position basse, si le cycliste n'exerce pas un effort suffisant pour comprimer le ressort 172, le cliquet 154 retient de nouveau la butée 168.

Selon une autre caractéristique de l'invention, le détecteur de tension de chaîne peut être combiné à un dispositif de réglage de hauteur de selle, ladite selle étant fixée à l'extrémité d'un tube monté coulissant par rapport au cadre. Ce dispositif comprend un ressort de compression prévu au niveau du tube de selle tendant à faire sortir ledit tube par rapport au cadre de bicyclette et des moyens d'arrêt en translation du tube de selle commandés par le câble du détecteur.

Ainsi, lorsque le cycliste est en roue libre, dans une descente par exemple, la selle est en position basse afin d'abaisser le centre de gravité de l'ensemble bicyclette/cycliste. Dès qu'il recommence à pédaler, le câble du détecteur agit à partir d'un certain seuil sur les moyens d'arrêt qui autorisent alors la translation du tube de selle. En se levant légèrement, le cycliste laisse se détendre le ressort de compression provoquant la montée de la selle.

Selon une autre combinaison, le détecteur d'effort de pédalage de l'invention peut être inclus dans un dispositif de mesure d'énergie produit par le cycliste comme illustré par la figure 10, de manière à surveiller leur dépense énergétique afin de mieux maîtriser leurs efforts ou encore de manière à adapter leur alimentation en fonction des efforts réalisés.

Dans ce cas, un détecteur d'effort de pédalage 200 selon l'invention est relié à un capteur de déplacement 202, plus particulièrement le câble 204 de sortie du détecteur est relié à l'extrémité d'un bras 206 du capteur 202 qui est lui même relié à des moyens de traitement et d'affichage 208. Ainsi, le signal du capteur 202 transmis aux moyens de traitement et d'affichage 208 est proportionnel au pivotement du bras 206 qui est lui même proportionnel à l'effort de pédalage.

Lorsque le cycliste applique un effort au niveau des pédales, comme il est mentionné précédemment, cet effort se traduit par un déplacement du câble 204 du détecteur plus ou moins important.

Selon une autre variante, le détecteur d'effort selon l'invention peut être intégré à un dispositif de mesure d'énergie produit par le cycliste et combiné à une suspension telle qu'illustrée par les figures 2 ou 7A. Dans ce cas, le bras 1 22 du boisseau peut également servir de bras à un capteur de déplacement.

Selon une autre caractéristique, le détecteur d'effort de pédalage peut être combiné à un dispositif de changement de vitesses automatique de manière que l'effort de pédalage soit sensiblement constant. Dans ce cas, le détecteur est conçu de telle manière qu'il soit sensible à l'effort de pédalage, et son câble est relié à un capteur de déplacement, par exemple selon l'agencement illustré par les figures 9A et 9B, ce dernier étant lui-même à un calculateur. Eventuellement, un autre capteur est prévu pour informer le calculateur sur le plateau entraînant la chaîne.

Dès que l'effort de pédalage mesuré dépasse un seuil bas prédéterminé, le calculateur provoque le changement de vitesse afin de choisir un rapport plus important. En complément, dès que l'effort de pédalage mesuré dépasse un seuil haut prédéterminé, le calculateur provoque le changement de vitesse afin que le rapport soit moins important.

Bien entendu, l'invention n'est évidemment pas limitée au mode de réalisation représenté et décrit ci-dessus, mais en couvre au contraire toutes les variantes, notamment en ce qui concerne les moyens de maintien déformable et les moyens d'amortissement.

Comme illustré par la figure 5, les moyens de maintien déformable peuvent être incorporés de manière à obtenir un ensemble plus compact, par exemple en disposant un ressort 210 entre le palier 68 et l'alésage 70 du cadre.

De la même façon, les moyens de commande peuvent être disposés au niveau du détecteur, par exemple en reliant un curseur 212 au palier 68 dont l'extrémité est susceptible de glisser sur une piste 214 reliée à l'alésage 70 du cadre de manière à former un potentiomètre.

Enfin, si le dispositif auquel est combiné le capteur d'effort comprend des moyens de rappel, ces derniers peuvent être utilisés comme moyen de maintien déformable.

## Revendications

1. Détecteur d'effort de pédalage et/ou de tension de chaîne prévu pour être rapporté sur un cadre de vélo comportant un axe (32) de pédalier **caractérisé en ce qu'**il comprend un élément intermédiaire (46,68), par rapport auquel peut pivoter l'axe du pédalier (32), susceptible de pivoter par rapport au cadre autour d'un axe (48) désaxé par rapport à l'axe (32) du pédalier ainsi que des moyens (52, 74) de maintien déformable susceptibles de s'opposer au pivotement dudit élément, le pivotement dudit élément à l'encontre des moyens de maintien engendré par l'effort de pédalage et/ou la tension de chaîne étant susceptible d'informer des moyens (44) de commande.

2. Détecteur selon la revendication 1, **caractérisé en ce qu'**il comprend une platine (46) montée pivotante autour d'un axe (48) solidaire de la partie inférieure du cadre, l'axe de pédalier étant monté pivotant dans un palier (50) solidaire de la platine.

3. Détecteur selon la revendication 1, **caractérisé en ce qu'**il comprend un palier (68) dans lequel l'axe (32) du pédalier est monté pivotant, ledit palier étant susceptible de pivoter dans un alésage, d'axe désaxé par rapport à l'axe du pédalier, disposé à l'extrémité inférieure du cadre.

4. Détecteur selon l'une des revendications 1 à 3, **caractérisé en ce que** les moyens (52) de maintien sont constitués d'un élément déformable (54) qui relie l'élément intermédiaire (46, 68) au cadre.

5. Détecteur selon l'une des revendications 1 à 3, **caractérisé en ce que** les moyens (74) de maintien comprennent un serti (82) solidaire d'un câble (78), reliant le détecteur aux moyens de commande, qui prend appui sur un élément (84) élastique déformable reposant sur une butée (86) solidaire du cadre.

6. Détecteur selon l'une des revendications 1 à 5, **caractérisé en ce qu'**il comprend des moyens (90) d'amortissement susceptibles de générer un phénomène d'hystérésis au niveau de l'action du câble sur les moyens (44) de commande.

7. Suspension autorégulatrice utilisant le détecteur selon l'une quelconque des revendications précédentes, ladite suspension étant de type hydraulique et comprenant un ajutage réglable pour ajuster la raideur de ladite suspension, **caractérisée en ce que** l'ajutage est réglé par les moyens (44) de commande reliés par l'intermédiaire d'un câble au détecteur.

8. Suspension autorégulatrice utilisant un détecteur selon l'une quelconque des revendications 1 à 6, comprenant un corps (132) dans lequel peut coulisser un piston (138), un ressort (144) étant interposé entre ces deux éléments (132, 138), **caractérisée en ce qu'**elle comprend un anneau (144) entourant le piston (138), relié au corps (132) par une patte (146), ledit anneau actionné par le câble du détecteur étant susceptible de coincer ledit piston par arc-boutement et/ou pincement respectivement par déformation de la patte et/ou par déformation radiale dudit anneau.

9. Dispositif de mesure d'énergie produit par un cycliste comprenant un détecteur d'effort de pédalage selon l'une quelconque des revendications 1 à 6, **caractérisé en ce que** ledit détecteur est susceptible d'informer un capteur de déplacement (202) relié à des moyens d'affichage et de traitement (208), le signal du capteur (202) transmis aux moyens d'affichage et de traitement (208) étant proportionnel à l'effort de pédalage et/ou de tension de chaîne.

10. Dispositif de blocage d'une suspension comprenant un détecteur d'effort de pédalage selon l'une quelconque des revendications 1 à 6, **caractérisé en ce que** ledit détecteur est susceptible de commander le déplacement vers le haut du tube de selle (158) lorsque le cycliste est en position dite "en danseuse", ledit déplacement provoquant la commande d'un actionneur (176) qui agit sur le réglage de la suspension.

## Claims

1. Detector of pedalling effort and/or chain tension intended to be added to a bicycle frame including a pedal assembly axis (32) **characterised in that** it comprises an intermediate element (46, 68), with respect to which the axis (32) of the pedal assembly can pivot, capable of pivoting with respect to the frame about an axis (48) that is off-centre with respect to the axis (32) of the pedal assembly as well as deformable holding means (52, 74) capable of opposing the pivoting of said element, the pivoting of said element against the holding means generated by the pedalling effort and/or the chain tension being capable of informing the control means (44).

2. Detector according to Claim 1, **characterised in that** it comprises a plate (46) mounted so as to pivot about an axis (48) integral with the lower part of the frame, the pedal assembly axis being mounted so as to pivot in a bearing (50) integral with the plate.

3. Detector according to Claim 1, **characterised in that** it comprises a bearing (68) in which the axis (32) of the pedal assembly is mounted so as to pivot, said bearing being capable of pivoting in a hole, with an axis that is off-centre with respect to the axis of the pedal assembly, positioned at the lower end of the frame.

4. Detector according to one of Claims 1 to 3, **characterised in that** the holding means (52) are constituted by a deformable element (54) that connects the intermediate element (46, 68) to the frame.

5. Detector according to one of Claims 1 to 3, **characterised in that** the holding means (74) comprise a crimp (82) integral with a cable (78), connecting the detector to the control means, which bears on a deformable resilient element (84) resting on a stop (86) integral with the frame.

6. Detector according to one of Claims 1 to 5, **characterised in that** it comprises damping means (90) capable of generating a hysteresis phenomenon in terms of the action of the cable on the control means (44).

7. Self-regulating suspension using the detector according to any one of the preceding claims, said suspension being of the hydraulic type and comprising an adjustable nozzle for adjusting the hardness of said suspension, **characterised in that** the nozzle is regulated by the control means (44) connected via a cable to the detector.

8. Self-regulating suspension using a detector according to any one of Claims 1 to 6, comprising a body (132) within which a piston (138) can slide, a spring (144) being interposed between these two elements (132, 138), **characterised in that** it comprises a ring (144) surrounding the piston (138), connected to the body (132) by a tab (146), said ring actuated by the cable of the detector being capable of wedging said piston by butting and/or pinching respectively by deformation of the tab and/or by radial deformation of said ring.

9. Device for measuring energy produced by a cyclist comprising a pedalling effort detector according to any one of Claims 1 to 6, **characterised in that** said detector is capable of informing a displacement sensor (202) connected to display and processing means (208), the signal of the sensor (202) transmitted to the display and processing means (208) being proportional to the pedalling effort and/or chain tension.

10. Device for locking a suspension comprising a pedalling effort detector according to any one of Claims 1 to 6, **characterised in that** said detector is capable of controlling the upward displacement of the seat tube (158) when the cyclist is standing on the pedals, said displacement causing an order to be given to an actuator (176) that adjusts the suspension.

## Patentansprüche

1. Tretkraft- und/oder Kettenspannungs-Detektor, der vorgesehen ist, an einem Fahrradrahmen mit Tretlagerachse (32) angebracht zu werden, **dadurch gekennzeichnet, dass** er aufweist: ein Zwischenelement (46, 68) relativ zu dem sich die Tretlagerachse (32) drehen kann, und das sich relativ zu dem Rahmen um eine Achse (48) drehen kann, die zur Tretlagerachse (32) versetzt ist, sowie deformierbare Haltemittel (52, 74), die der Drehbewegung des Elements entgegenwirken, wobei durch das durch die Tretkraft und/oder die Kettenspannung erzeugte und gegen die Haltemittel erfolgende Drehen des Elements Steuermittel (44) informiert werden.

2. Detektor gemäß Anspruch 1, **dadurch gekennzeichnet, dass** er eine Platte (46) aufweist, die drehbar um eine Achse (48) gelagert ist, die fest mit dem unteren Teil des Rahmens verbunden ist, wobei die Tretlagerachse drehbar in einem Lager (50) gelagert ist, das fest mit der Halteplatte verbunden ist.

3. Detektor gemäß Anspruch 1, **dadurch gekennzeichnet, dass** er ein Lager (68) aufweist, in dem die Tretlagerachse (32) drehbar gelagert ist, wobei das Lager in einer am unteren Endstück des Rahmens vorgesehenen Öffnung mit einer zur Tretlagerachse versetzten Achse drehbar ist.

4. Detektor gemäß einem der Ansprüche 1 bis 3, **dadurch gekennzeichnet, dass** die Haltemittel (52) aus einem verformbaren Element (54) gebildet sind, das das Zwischenelement (46, 68) mit dem Rahmen verbindet.

5. Detektor gemäß einem der Ansprüche 1 bis 3, **dadurch gekennzeichnet, dass** die Haltemittel (74) eine Hülse (82) aufweisen, die fest mit einem Kabel (78) verbunden ist, das den Detektor mit den Steuermitteln verbindet, und die sich auf ein elastisches deformierbares Element (84) stützt, das auf einem mit dem Rahmen fest verbundenen Anschlag (86) liegt.

6. Detektor gemäß einem der Ansprüche 1 bis 5, **dadurch gekennzeichnet, dass** er Dämpfungsmittel (90) aufweist, die geeignet sind, ein Hysterese-Phänomen in Abhängigkeit von der Wirkung des Kabels auf die Steuermittel (44) zu erzeugen.

7. Selbstregulierende Federung, die den Detektor gemäß einem der vorhergehenden Ansprüche verwendet, wobei die Federung hydraulisch ist und ein verstellbares Ansatzstück aufweist, um die Steifigkeit der Federung zu regulieren, **dadurch gekennzeichnet, dass** das Ansatzstück mittels Steuermitteln (44) verstellt wird, die durch ein Kabel mit dem Detektor verbunden sind.

8. Selbstregulierende Federung, die den Detektor gemäß einem der Ansprüche 1 bis 6 verwendet, die einen Körper (132), in dem ein Kolben (138) gleiten kann, und eine Feder (144), die zwischen diesen beiden Bauteilen (132, 138) angeordnet ist, aufweist, **dadurch gekennzeichnet, dass** sie einen Ring (144), der den Kolben (138) umgibt, der mit dem Körper (132) durch eine Klaue (146) verbunden ist, aufweist, wobei der Ring, der durch das Kabel des Detektors angetrieben wird, geeignet ist, den Kolben durch Selbsthemmung und/oder Klemmen beziehungsweise Verformung der Klaue und/oder durch radiale Verformung des Rings einzuklemmen.

9. Vorrichtung für die Messung von durch einen Fahrradfahrer produzierter Energie, die einen TretkraftDetektor gemäß einem der Ansprüche 1 bis 6 aufweist, **dadurch gekennzeichnet, dass** der Detektor geeignet ist, einen Verlagerungssensor (202), der mit Anzeige- und Verarbeitungsmitteln (208) gekoppelt ist, zu informieren, wobei das an die Anzeige- und verarbeitungsmittel (208) übertragene Signal des Sensors (202) proportional zu der Tretkraft und/oder der Kettenspannung ist.

10. vorrichtung für die Blockierung einer Federung, die einen Tretkraftdetektor gemäß einem der Ansprüche 1 bis 6 aufweist, **dadurch gekennzeichnet, dass** der Detektor geeignet ist, die Höhen-Verlagerung des Sattelrohres (158) zu steuern, wenn der Fahrradfahrer sich im so genannten "Wiegetritt" befindet, wobei die Verlagerung die Steuerung eines Schalters (176) verursacht, der auf die Regulierung der Federung wirkt.
